# EUROPEAN PATENT APPLICATION

(11) **EP 4 718 423 A1**
(43) Date of publication of application: **01.04.2026**
(21) Application number: 24815231.6
(22) Date of filing: 16.05.2024
(51) Int. Cl.: G09B 7/04

(54) **LEARNING ASSISTANCE SYSTEM**

(30) Priority: 01.06.2023 JP 2023090823; 22.11.2023 JP 2023197963
(71) Applicant: Umelabo Co., Ltd., Osaka-shi, Osaka 541-0044 (JP)
(72) Inventor: UMEZAKI Yusuke, Osaka-shi, Osaka 541-0044 (JP)
(74) Representative: Rybarczyk, Dariusz Pawel
(86) International application number: PCT/JP2024/018131
(87) International publication number: WO 2024/247747

(57) **Abstract**

[Problem] To provide a learning assistance system that makes it possible to continue learning and maintaining motivation for learning.

[Solution] This learning assistance system 10 comprises: a question storage unit 12 in which a plurality of questions are registered for a learner 4 to acquire knowledge and answers respectively corresponding to the plurality of questions; a question-asking interval determination unit 14 that, when determining a question-asking date and time of each question of the plurality of questions, determines a question-asking interval such that the learning effect of the learner 4 is enhanced; a question-asking unit 18 that, on the basis of the question-asking interval determined by the question-asking interval determination unit 14, asks the learner 4 the respective questions; and a question-asking frequency adjustment unit 16 that, if the number of questions per day to be asked by the question-asking unit 18 exceeds a predetermined upper limit, increases the question-asking interval and postpones asking a question.

## Description

### TECHNICAL FIELD

The present invention relates to learning support systems.

### BACKGROUND ART

Traditionally, learners learned through paper-based media, but with the developments in digital technology, software and other means for learning have been developed, and opportunities to learn using such software and other means are increasing. As technology related to the present invention, for example, Patent Document 1 describes a learning support device characterized in comprising: a learning-history database that stores, for each learner and question, the number of times of learning, the date and time of the last study, and the final correct/incorrect result indicating whether the answer was correct or incorrect the last time the learner studied; extraction means that extracts information of a specific learner from the learning-history database; calculation means that into a retention function, which is defined by a forgetting approximation function expressed as a function of the number of times of learning and the elapsed time since the date and time of the last study, and a term of the final correct/incorrect result, and takes a smaller value when the final correct/incorrect result is an incorrect answer than when the final correct/incorrect result is a correct answer, substitutes information of the specific learner extracted by the extraction means, and calculates a current retention level for each question; and presentation means that on the basis of the current retention level calculated by the calculation means, presents a question to be currently studied.

### RELATED ART DOCUMENTS

### PATENT DOCUMENT

Patent Document 1: JP 2012-137699 A

### SUMMARY OF THE INVENTION

### PROBLEM TO BE SOLVED BY THE INVENTION

For example, when studying using a learning support device such as the software disclosed in Patent Document 1 continues, the number of questions submitted per day increases over time. When the average number of questions per day exceeds several hundred, neglecting learning for just a few days can lead to a massive backlog of questions, which, when learning is resumed, may be submitted all at once, significantly reducing motivation for learning.

An objective of the present invention is to provide a learning support system that enables continuous learning while maintaining motivation for learning.

### MEANS FOR SOLVING THE PROBLEMS

A learning support system involving the present invention includes a question storage unit in which a plurality of questions for a learner to acquire knowledge and answers respectively corresponding to the plurality of questions are registered; a question interval determination unit configured to determine, in determining a date and time for submitting each of the plurality of questions, a question interval such that an effect of learning by the learner is enhanced; a question submission unit configured to submit each of the questions to the learner, based on the question interval determined by the question interval determination unit; and a question frequency adjustment unit configured to lengthen the question interval of a low-priority question to postpone submission if a number of questions per day submitted by the question submission unit exceeds a predetermined upper limit.

With the learning support system involving the present invention, it is preferable that the question frequency adjustment unit be configured to select a plurality of questions from among questions a next scheduled submission date of which is within a given period, and shorten the question interval to advance submission, if the number of questions per day falls below a predetermined lower limit.

Also with the learning support system involving the present invention, it is preferable that the question frequency adjustment unit be configured to obtain a median number of responses per day from a total number of responses from the learner in one year, and set the median value multiplied by a predetermined multiplying factor as the upper limit of the number of questions per day.

Also with the learning support system involving the present invention, it is preferable that the question frequency adjustment unit be configured to obtain a third quartile (Q3) and an interquartile range (IQR) of a number of responses per day from a total number of responses from the learner in one year, and set a value obtained from the third quartile (Q3) + (the interquartile range (IQR) × a predetermined multiplying factor) as the upper limit of the number of questions per day.

### EFFECTS OF THE INVENTION

The present invention enables continuous learning while maintaining motivation for learning.

### BRIEF DESCRIPTION OF DRAWINGS

Fig. 1 is a diagram illustrating a learning support system of an embodiment involving the present invention.
Fig. 2 is a diagram illustrating a situation in which a question has been submitted using the learning support system of the embodiment involving the present invention.
Fig. 3 is a diagram illustrating a situation in which the question submitted using the learning support system of the embodiment involving the present invention has been answered.
Fig. 4 is a diagram illustrating a situation in which the learning support system of the embodiment involving the present invention is used to register a question.
Fig. 5 is a diagram illustrating a situation in which the question registered using the learning support system of the embodiment involving the present invention has been submitted.
Fig. 6 is a diagram illustrating a situation in which the question submitted using the learning support system of the embodiment involving the present invention has been answered.
Fig. 7 is a diagram illustrating a situation in which the learning support system of the embodiment involving the present invention is used to set a multiplying factor, etc.

### DESCRIPTION OF EMBODIMENT

Hereinafter, a mode of embodying the present invention is explained in detail with reference to the accompanying drawings. In the following, like elements are assigned the same reference numerals in all the figures in the drawings, and a repeated description is omitted. In addition, in the description in the text, the reference numerals mentioned previously are used if necessary.

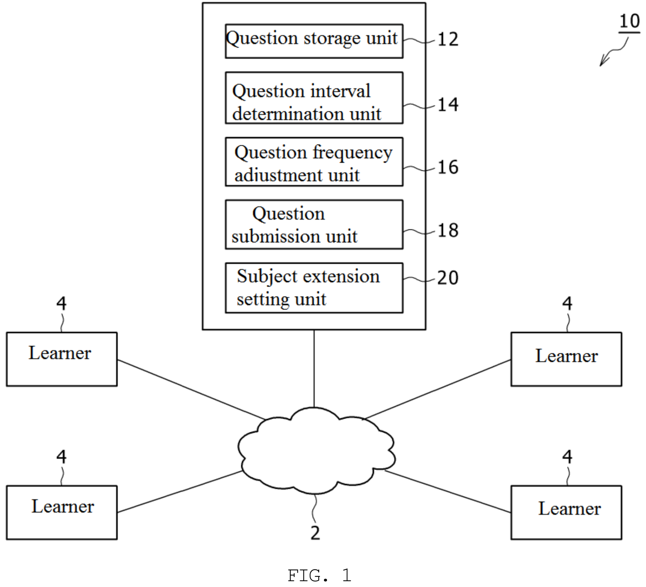

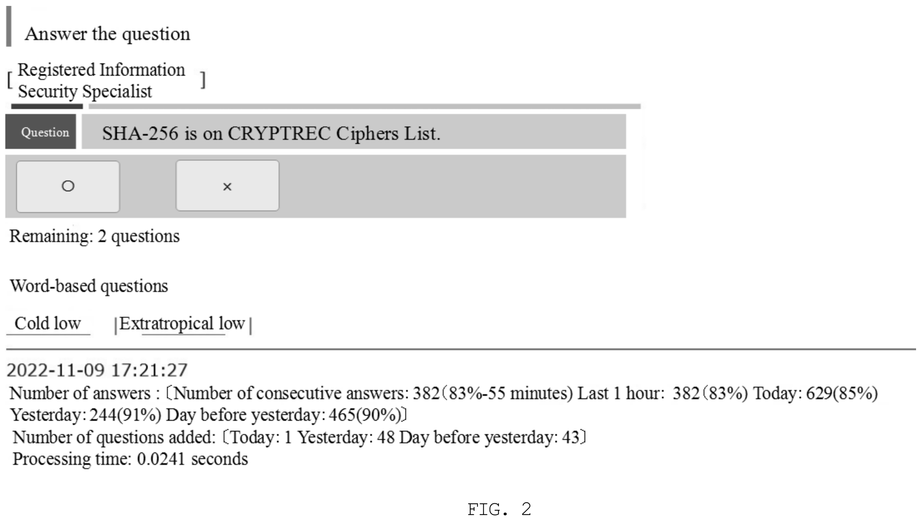

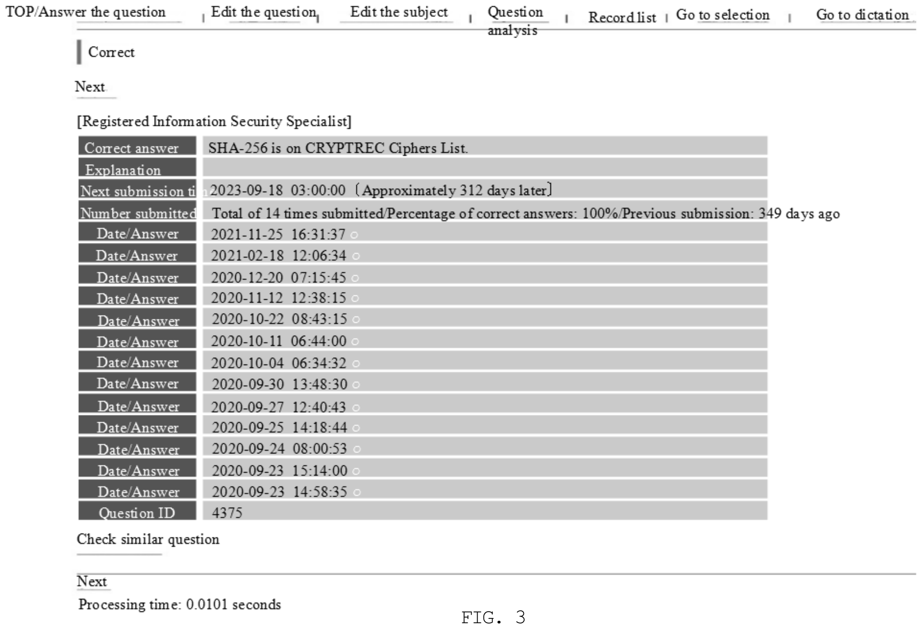

Fig. 1 is a diagram illustrating a learning support system 10 of an embodiment involving the present invention. Fig. 2 is a diagram illustrating a situation in which a question has been submitted using the learning support system 10 of the embodiment involving the present invention. Fig. 3 is a diagram illustrating a situation in which the question submitted using the learning support system 10 of the embodiment involving the present invention has been answered.

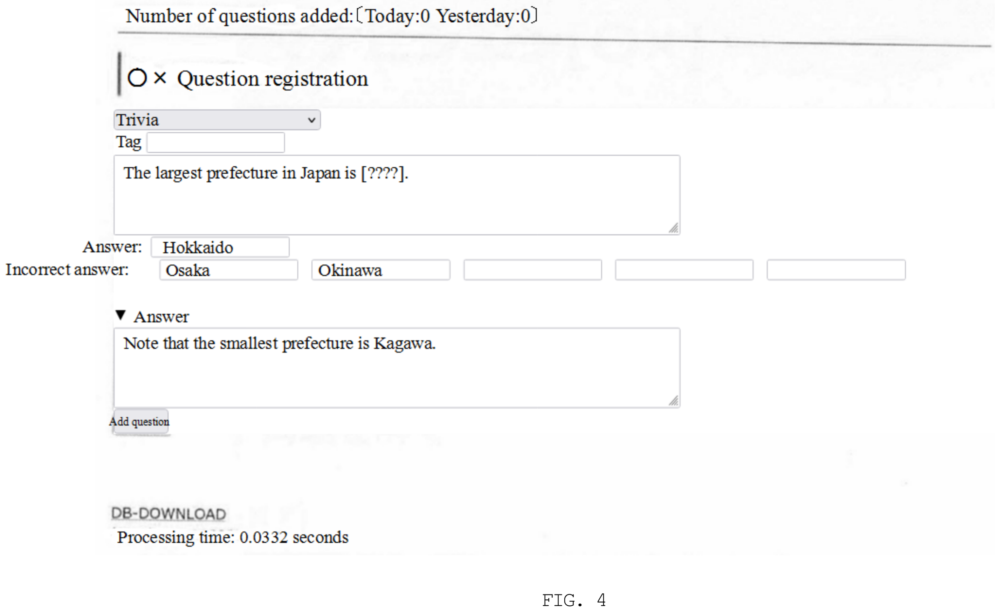

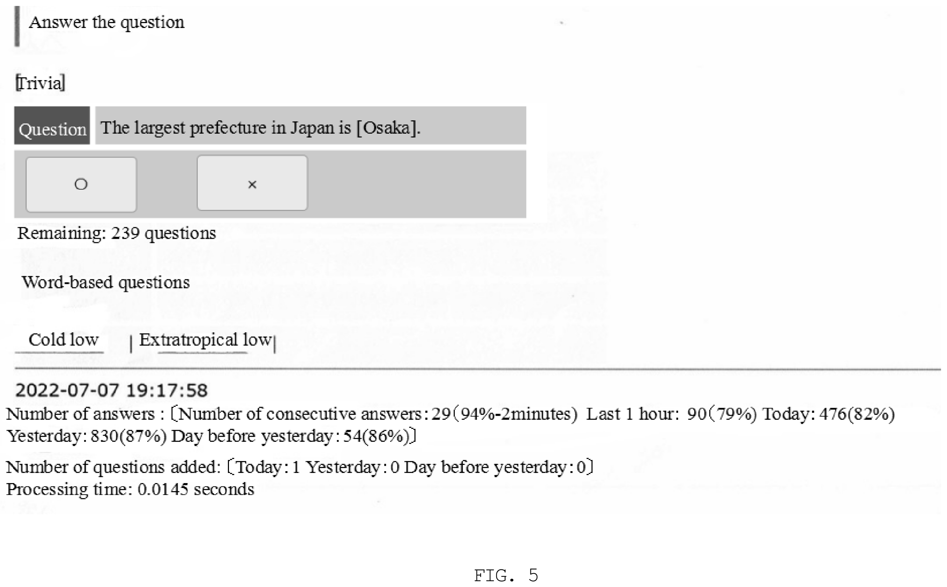

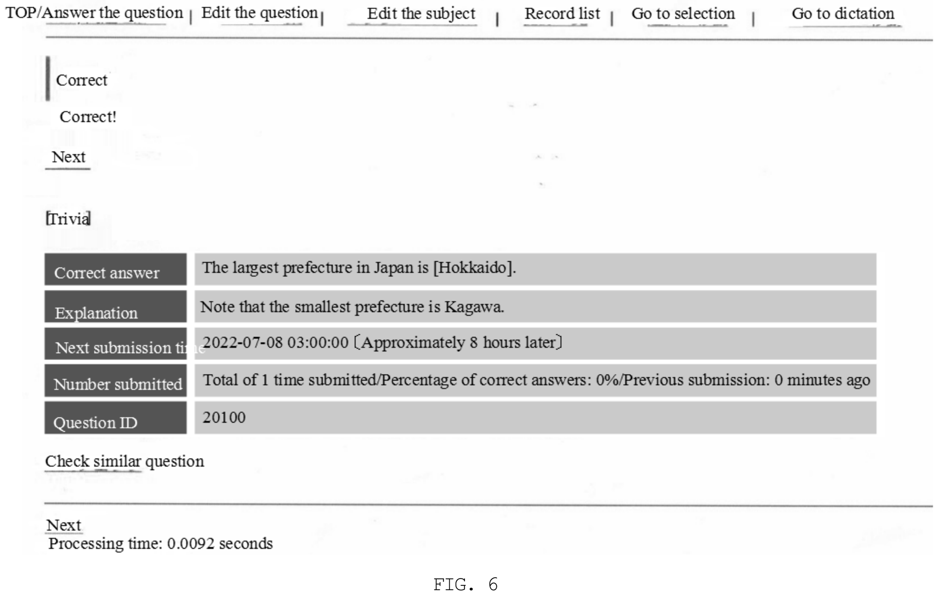

Fig. 4 is a diagram illustrating a situation in which the learning support system 10 of the embodiment involving the present invention is used to register a question. Fig. 5 is a diagram illustrating a situation in which the question registered using the learning support system 10 of the embodiment involving the present invention has been submitted. Fig. 6 is a diagram illustrating a situation in which the question submitted using the learning support system 10 of the embodiment involving the present invention has been answered.

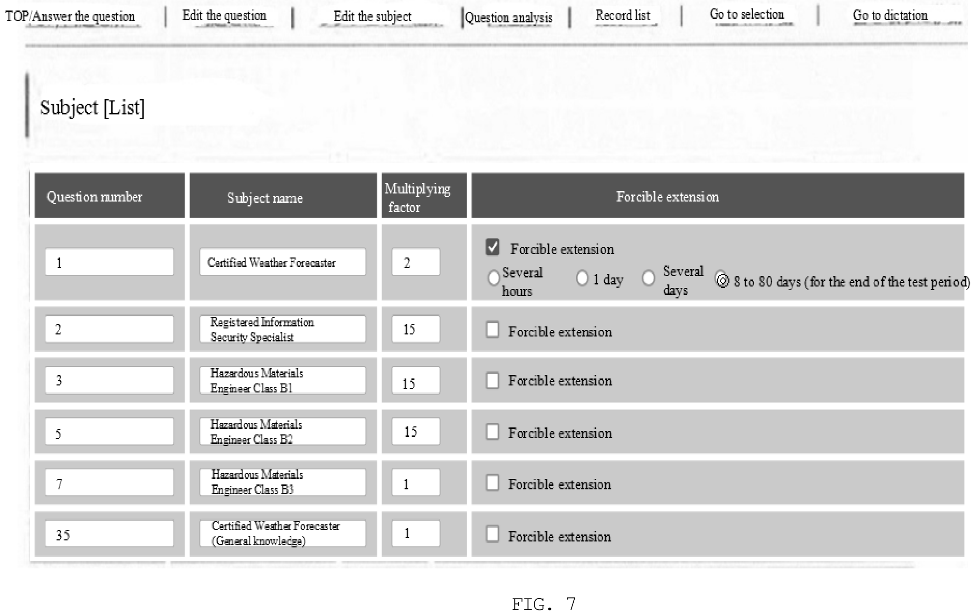

Fig. 7 is a diagram illustrating a situation in which the learning support system 10 of the embodiment involving the present invention is used to set a multiplying factor, etc.

The learning support system 10 is a system to help a learner 4 learn efficiently. The learning support system 10 includes a question storage unit 12, a question interval determination unit 14, a question frequency adjustment unit 16, a question submission unit 18, and a subject extension setting unit 20.

The question storage unit 12 has a function for registering a plurality of questions for the learner 4 to acquire knowledge and answers respectively corresponding to the plurality of questions. Here, as illustrated in Fig. 4, description is given of an instance in which the learner 4 himself/herself can create and register questions that he/she wishes to study, but questions prepared in advance may also be registered.

In the example illustrated in Figs. 4 and 5, the question "Osaka is the prefecture having the largest area in Japan" is to be answered with O or ×. Here, if × is selected, "correct" is displayed, as illustrated in Fig. 6. Naturally, since the correct answer to this question is "Hokkaido," the correct answer is displayed and, as related information, the fact that the prefecture having the smallest area is "Kagawa" is also displayed.

Questions registered by the question storage unit 12 are classified into a plurality of subjects. The subjects may be classified as, for example, Japanese history, world history, English, mathematics, chemistry, physics, biology, etc., as well as by qualifications such as Certified Weather Forecasters, Registered Information Security Specialist, Real Estate Notary, Patent Attorney, Certified Administrative Procedures Legal Specialist, etc.

In determining a date and time for submitting each of the plurality of questions, the question interval determination unit 14 has a function of determining a question interval on the basis of the Ebbinghaus' forgetting curve so as to enhance the learning effect of the learner 4. The Ebbinghaus' forgetting curve is a graph that plainly represents the mechanism through which people forget, with "savings" on the vertical axis and "time" on the horizontal axis.

On the basis of the Ebbinghaus' forgetting curve or the like, the question interval determination unit 14 can set an interval so that learnt contents are efficiently retained. The question intervals for consecutive correct answers will be 24 to 48 hours for the first time, 4 to 8 days for the second time, 7 to 14 days for the third time, 9 to 20 days for the fourth time, and 12 to 26 days for the fifth time.

From the sixth time onwards, the interval changes according to the accuracy rate. For example, when the accuracy rate is 0% or 10%, the interval will be 15 to 32 days, and when the accuracy rate is 20% or 30%, the interval will be 20 to 37 days. When the accuracy rate is 40% or 50%, the interval will be 25 to 42 days, and when the accuracy rate is 60% or 70%, the interval will be 30 to 47 days. When the accuracy rate is 80% or 90%, the interval will be 35 to 52 days, and when the accuracy rate is 100%, the interval will be 40 to 57 days.

The explanation for the seventh through ninth times is omitted, and the explanation for the 10th time will now be provided. For the 10th time, when the correct answer rate is 0% or 10%, the interval will be 25 to 56 days, and when the accuracy rate is 20% or 30%, the interval will be 34 to 65 days. When the accuracy rate is 40% or 50%, the interval will be 43 to 74 days, and when the accuracy rate is 60% or 70%, the interval will be 52 to 83 days. When the accuracy rate is 80% or 90%, the interval will be 61 to 92 days, and when the accuracy rate is 100%, the interval will be 70 to 101 days.

The question frequency adjustment unit 16 multiplies the question interval for questions of low learning need for the learner 4 by a predetermined multiplying factor so as to reduce the frequency of the questions of low need. The predetermined multiplying factor here is described as being set on a per-subject basis, but it may also be set on a per-question basis.

For example, a person who has passed the qualification examinations for Registered Information Security Specialist has already acquired the knowledge for this qualification examinations, so there is little need to re-solve the questions frequently, and it would be more efficient to spend the time for other studies. In addition to this, other settings for questions of low learning need for the learner 4 are also possible; questions for which the correct answer rate for each question in the past was, for example, 80% or higher can be set as those of little need to re-solve.

However, if he/she stops studying at all, there is a possibility that his/her knowledge will be lost. Therefore, for example, as illustrated in Fig. 7, the question interval for questions for Registered Information Security Specialist is multiplied by a predetermined multiplying factor (e.g., 15 times) to increase the interval. In this way, the question frequency adjustment unit 16 allows for setting of the predetermined multiplying factor on a per-subject (e.g., Registered Information Security Specialist) basis.

Specifically, multiplying the period of the question interval by the predetermined multiplying factor allows for adjustment such that, for example, a question originally to be submitted in 30 days will be submitted in one year. This has the advantage that questions registered several years ago will be submitted at a time when the learner has almost forgotten about them, and thereby the memory retention is improved.

For example, if the number of seconds until the question is submitted is 2,937,600 seconds (34 days) and the multiplying factor is 15, the question can be adjusted so that it is not submitted for 2,937,600 seconds x 15 = 44,064,000 seconds (510 days), i.e., more than one year.

The advantage is that while spending time on questions of high need, the learner can also learn questions of low need at a reduced frequency as described above so that the knowledge is not lost, which serves lifelong learning.

As the number of registered questions increases, a large number of questions may be submitted in a day, which may discourage learner 4 from learning. However, by making adjustment as described above, it is possible to distribute submission of the registered questions and keep the willingness for learning of the learner 4.

The question frequency adjustment unit 16 has an additional function of adding 5 to 7 days to the question interval when the number of correct answers is 12 or more. This is because it is judged that infrequent submission of questions that have been answered correctly 12 or more times in the past will not affect learning.

Furthermore, the question frequency adjustment unit 16 has an additional function of adding 1 to 2 days to the question interval if the number of correct answers is less than 12 but the multiplying factor is 2 or greater. This is because it is judged that even if the number of correct answers is less than 12, when the multiplying factor is 2 or greater, there is little need to rush to re-submit the question.

The question frequency adjustment unit 16 has an additional function of providing a time difference of approximately 5 hours for each question if the next submission is due in 24 hours or later. This process ensures that the questions are not concentrated at a specific time, but are distributed.

The question frequency adjustment unit 16 has an additional function of setting the date and time of the next submission to 300 to 360 days, up to 360 days, if the number of correct answers is 16 or less. Multiplication by a multiplying factor as described above may result in an extremely long question interval, such as 510 days before submission. The reason for this is to ensure that adjustments are made such that questions are always submitted at least once a year, because questions that are registered near the end of the qualification examinations, the examination for which is held immediately after, and the multiplying factor for which is set high may be particularly subject to an extreme drop in the number submitted.

Furthermore, the question frequency adjustment unit 16 sets the upper limit of the interval to 1820 days, if the number of correct answers exceeds 16 times. This is because even if the number of correct answers is many, without the upper limit of approximately 1820 days (5 years), there is a possibility that the memory cannot be maintained.

The question frequency adjustment unit 16 has an additional function of adding 6 to 7 days if the next submission is due in 3 days or later and between December 31 and January 4. This process is based on the assumption that the learner 4 may wish to take a break during the year-end and New Year holidays. It should be noted that with the limitation of 3 days or later, it does not mean that the question will not be submitted at all.

The question frequency adjustment unit 16 has an additional function of adding 2 to 5 days if the next submission is due in 8 days or later and on a Saturday or Sunday. The reason for this process is based on an assumption that the learner 4 may wish to take a break on Saturdays and Sundays.

Furthermore, the question frequency adjustment unit 16 has an additional function of adding or subtracting 1 day if the next submission is due in 20 days or later and on a Wednesday. This is based on an assumption that slightly reducing the frequency of the questions on Wednesdays may help the learner 4 maintain his/her motivation to study.

The question frequency adjustment unit 16 has an additional function of standardizing the time of the submission at, for example, 3:00 a.m., if the next submission is due in 3 days or later. This is to prevent the learner 4 from feeling stressed when the number of questions exceeds 100, and even after all the questions have been answered correctly, different questions are submitted soon afterwards.

As described above, the frequency of the questions is adjusted by the function of the question frequency adjustment unit 16, but in lifelong learning, when using the learning support system 10 for many years, the number of questions per day may become large, and therefore, in order to prevent dampening the motivation of the learner 4, the system has a function of further adjusting the frequency of the questions.

For example, when the learner 4 answers an average of 500 questions per day, then missing five days due to illness is anticipated to result in approximately 2,500 questions to be submitted. Furthermore, in a situation in which questions cannot be answered for extended periods, such as during long vacations like summer or winter break, or due to natural disasters, the number of questions will increase more significantly. For such issues, the question frequency adjustment unit 16 further adjusts the frequency of the questions.

Specifically, the question frequency adjustment unit 16 has the function of lengthening the question interval to postpone submission if the number of questions per day submitted by the question submission unit 18 exceeds a predetermined upper limit, while shortening the question interval to advance submission if the number of questions per day falls below a predetermined lower limit.

For example, when the total number of responses from the learner 4 in one year (365 days) is 138,798 questions, the maximum number of responses per day is 1,664 questions, the average number of responses per day is approximately 389.88 questions, the first quartile (Q1) of the number of responses per day is 179.75 questions, the median number of responses per day (second quartile, Q2) is 359 questions, the third quartile (Q3) of the number of responses per day is 541.75 questions, the interquartile range (Q3 - Q1) of the number of responses per day is 362 questions, and the third quartile + 1.5 times the IQR (Q3 x 1.5) is 1,085 questions. Explanation will be made below with reference to this example.

The question frequency adjustment unit 16 has a function of setting as an upper limit, a value that is twice the median number of responses to the number of questions submitted by the question submission unit 18 in the past. Also, the question frequency adjustment unit 16 has a function of lengthening the question interval of the low-priority questions with little need to re-solve for the learner 4 to postpone submission, when the number of questions per day submitted by the question submission unit 18 exceeds the predetermined upper limit. The low-priority questions can be determined on the basis of the correct answer rates of each question answered by the learner 4 in the past; as an example, questions with a correct answer rate of 80% or higher can be defined as of low priority. Also, the priority may be determined according to the value of the correct answer rate. For example, the lower the correct answer rate, the more likely the question needs to be re-solved again, so may be set to higher priority, while the higher the correct answer rate, the less likely the question needs to be solved, so may be set to lower priority. The priority naturally may be determined in other ways, for example, the learner 4 himself/herself may set it arbitrarily in advance.

For example, as described above, if the median number of responses per day is 359 questions, the upper limit for the number of daily questions is set at 359 x 2 = 718 questions, and when the number of questions per day exceeds 718 questions, in order to keep the number of questions below 718, among the questions to be submitted, the question interval of low-priority questions with, for example, a correct answer rate of 80% or higher is lengthened to postpone submission.

As another method, the question frequency adjustment unit 16 has a function of setting the upper limit value to the value based on the number of responses to the number of questions submitted by the question submission unit 18 in the past, obtained by the third quartile (Q3) + (the interquartile range (IQR) × 1.5).

For example, as described above, when the third quartile (Q3) of the number of responses per day is 541.75 questions and the interquartile range (Q3 - Q1) of the number of responses per day is 362 questions, the third quartile (Q3) + (interquartile range (IQR) × 1.5) = 541.75 + 362 × 1.5 = approximately 1085 will be set as the upper limit. When the number of questions per day exceeds 1,085 questions, in order to keep the number of questions below 1085, among the questions to be submitted, the question interval of the low-priority questions with a correct answer rate of 80% or higher will be lengthened to postpone submission.

The above-described setting of the upper limit value is also applied conversely to the lower limit value. For example, if the average number of answers per day is around 50 questions with little variation from day to day, to prepare for the possibility that the number of questions that can be submitted will be extremely reduced, the lower limit can be set at 100 questions, and when the number of questions is less than 100 questions, the long question interval is shortened by advancing the questions to increase the number of questions.

Here, it is preferable that the fact that the learner 4 works from Monday to Friday and has weekends off be taken into consideration to some extent in submitting questions. For this purpose, the number of responses for the learner 4 for one year (365 days) may be broken down by day of the week.

For example, the total number of responses on Sunday is 13,318 questions with the maximum being 719 questions, the average being 283.3 questions, Q1 being 170.5 questions, the median (Q2) being 269 questions, Q3 being 363.5 questions, Q3 - Q1 being 193 questions, and Q3 + IQR x 1.5 being 653 questions.

The total number of responses on Monday is 21,859 questions with the maximum being 1,280 questions, the average being 420.3 questions, Q1 being 236 questions, the median (Q2) being 413 questions, Q3 being 500 questions, Q3 - Q1 being 264 questions, and Q3 + IQR x 1.5 being 896 questions.

The total number of responses on Tuesday is 23,669 questions, with the maximum being 1,268 questions, the average being 464.0 questions, Q1 being 264.5 questions, the median (Q2) being 453 questions, Q3 being 631.5 questions, Q3 - Q1 being 367 questions, and Q3 + IQR x 1.5 being 1,182 questions.

The total number of responses on Wednesday is 19,058 questions, with the maximum being 854 questions, the average being 366.5 questions, Q1 being 228 questions, the median (Q2) being 335.5 questions, Q3 being 521.25 questions, Q3 - Q1 being 293.25 questions, and Q3 + IQR x 1.5 being 962 questions.

The total number of responses on Thursday is 24,183 questions, with the maximum of 1,030 questions, the average of 465.0 questions, Q1 being 298.2 questions, the median (Q2) being 457 questions, Q3 being 635.7 questions, Q3 - Q1 being 337.5 questions, and Q3 + IQR x 1.5 being 1,142 questions.

The total number of responses on Friday is 25,121 questions, with the maximum being 1,664 questions, the average being 492.5 questions, Q1 being 165 questions, the median (Q2) being 441 questions, Q3 being 674.5 questions, Q3 - Q1 being 509.5 questions, and Q3 + IQR × 1.5 being 1,439 questions.

The total number of responses on Saturday is 11,590 questions, with the maximum being 784 questions, the average being 227.2 questions, Q1 being 132 questions, the median (Q2) being 186 questions, Q3 being 302 questions, Q3 - Q1 being 170 questions, and Q3 + IQR × 1.5 being 557 questions.

As described above, the number of responses varies greatly according to day of the week. Depending on lifestyle, the number of responses on Fridays and Saturdays can differ by nearly double. Therefore, it is expected that varying the number of questions according to the day of the week will prevent dampening the motivation. Therefore, the upper limit can be set for each day of the week, so that the number of questions can be changed for each day of the week.

On the basis of the question intervals determined by the question interval determination unit 14 and the question intervals having been adjusted by the question frequency adjustment unit 16, the question submission unit 18 submits each question to the learner 4.

Specifically, after the learner 4 registers a question that he/she wishes to learn as illustrated in Fig. 4, the question will be submitted to a terminal (smartphone, tablet device, or personal computer) of the learner 4 at intervals such as in 10 minutes, at 3:00 the next morning, in 5 to 6 days, in 10 to 14 days, 15 to 20 days, and 21 to 28 days.

The question submission unit 18 has an additional function of selecting a plurality of questions from among the questions the next scheduled submission date of which is within a given period, and submitting them ahead of schedule. Specifically, from among the questions the next submission date of which is scheduled, for example, within 20 days, questions with which "a certain period of time has passed since the previous submission date and the next submission is due in the nearest future" is submitted ahead of schedule.

The questions to be submitted ahead of schedule are those that are scheduled to be submitted, for example, within 24 hours when the day on which the questions were previously answered was 5 days ago. In order that questions from as wide a range of subjects as possible be submitted ahead of schedule, as a general rule, no more than 4 questions should be submitted from each subject, but if there are no available questions, the search is made not on a per-subject basis but from among all genres, so the number of questions is not necessarily limited to 4.

The subject extension setting unit 20 has a function of adding a predetermined period on a per-subject basis to a question interval. As illustrated in Fig. 7, the subject extension setting unit 20, having as the time to be forcibly extended, options such as a few hours, 1 day, a few days, and 8 to 80 days, adds a selected extension period to the question interval.

For example, extension of time is available for 1 day when the learner decides that he/she is busy today, for a few days when he/she feels like taking a few days off, or for 8 to 80 days when he/she decides that there is little need to study because there are no exams for a certain period of time.

The operation of the learning support system 10 in the above configuration will now be explained. The learner 4 creates questions related to the learning contents that he/she considers himself/herself to study, and as illustrated in Fig. 4, registers the questions himself/herself.

After registration by the learner 4 himself/herself, the question will be submitted to a terminal (smartphone, tablet device, or personal computer) of the learner 4 at intervals such as 10 minutes, until 3:00 the next morning, 5 to 6 days, 10 to 14 days, 15 to 20 days, and 21 to 28 days.

The above intervals are set so that the memory retention of the learnt contents is appropriate on the basis of the Ebbinghaus' forgetting curve, enabling the learner 4 to learn efficiently.

However, as the number of questions the learner 4 has registered increases, the number of questions submitted in a day also increases, by which the learner 4 may be discouraged from learning, resulting in decrease in learning efficiency. For example, a person who has passed the qualification examination for Registered Information Security Specialist has already acquired the knowledge for this qualification examination, so there is little need to re-solve the questions frequently, and it would be more efficient to spend the time for other studies.

However, if he/she stops studying at all, there is a possibility that his/her knowledge will be lost. Therefore, for example, as illustrated in Fig. 7, the question interval for questions for Registered Information Security Specialist is multiplied by a predetermined multiplying factor (e.g., 15 times) to increase the interval. In this way, the question frequency adjustment unit 16 allows for setting of the predetermined multiplying factor on a per-subject (e.g., Registered Information Security Specialist) basis. This has the advantage that questions registered several years ago will be submitted at a time when the learner has almost forgotten about them, and thereby the memory retention is improved.

According to the learning support system 10, the advantage is that while spending time on questions of high need, the learner can also learn questions of low need at a reduced frequency as described above so that the knowledge is not lost, which serves lifelong learning.

Also according to the learning support system 10, extension of time is available for 1 day when the learner decides that he/she is busy today, for a few days when he/she feels like taking a few days off, or for 8 to 80 days when he/she decides that there is little need to study because there are no exams for a certain period of time, so that the learner can continue studying within a reasonable range. Therefore the system is suitable for lifelong learning.

Here, the learning support system 10 is an optimal system for the learner 4 who is engaged in lifelong learning, and as the system is used over a long period of time, the number of questions registered increases. In such situations, if a learner takes a week off due to an infectious disease, for example, a large number of problems may be submitted when he/she resumes learning after recovering. In such a situation, there is a risk that the willingness of the learner 4 to learn could be undermined.

According to the learning support system 10, on the basis of the number of responses per day of the week in the number of responses by the learner 4 over the past year (365 days), the upper limit is set to twice the median number of responses by this learner 4, or to the outlier (third quartile (Q3) + (interquartile range(IQR) × 1.5), and to prevent further questions from being submitted, the number of questions is controlled by lengthening the question interval of low-priority questions to postpone submission. This effectively curbs the extreme increase in the number of questions, thereby yielding the significant benefit of enabling lifelong learning while maintaining the motivation of the learner 4.

### LIST OF REFERENCE NUMERALS

4: Learner, 10: Learning support system, 12: Question storage unit, 14: Question interval determination unit, 16: Question frequency adjustment unit, 18: Question submission unit, 20: Subject extension setting unit

## Claims

1. A learning support system comprising:
a question storage unit in which a plurality of questions for a learner to acquire knowledge and answers respectively corresponding to the plurality of questions are registered;
a question interval determination unit configured to determine, in determining a date and time for submitting each of the plurality of questions, a question interval such that an effect of learning by the learner is enhanced;
a question submission unit configured to submit each of the questions to the learner, based on the question interval determined by the question interval determination unit; and
a question frequency adjustment unit configured to lengthen the question interval of a low-priority question to postpone submission if a number of questions per day submitted by the question submission unit exceeds a predetermined upper limit.

2. The learning support system according to claim 1, wherein
the question frequency adjustment unit is configured to select a plurality of questions from among questions a next scheduled submission date of which is within a given period, and shorten the question interval to advance submission, if the number of questions per day falls below a predetermined lower limit.

3. The learning support system according to claim 1, wherein
the question frequency adjustment unit is configured to obtain a median number of responses per day from a total number of responses from the learner in one year, and set the median value multiplied by a predetermined multiplying factor as the upper limit of the number of questions per day.

4. The learning support system according to claim 1, wherein the question frequency adjustment unit is configured to obtain a third quartile (Q3) and an interquartile range (IQR) of a number of responses per day from a total number of responses from the learner in one year, and set a value obtained from the third quartile (Q3) + (the interquartile range (IQR) × a predetermined multiplying factor) as the upper limit of the number of questions per day.
